# EUROPEAN PATENT SPECIFICATION

(11) **EP 3 164 289 B1**
(45) Date of publication and mention of the grant of the patent: **18.03.2020**
(21) Application number: 15736807.7
(22) Date of filing: 02.07.2015
(51) Int. Cl.: B60K 17/346, B60K 17/35

(54) **A VEHICLE DRIVELINE SYSTEM**
FAHRZEUGANTRIEBSSTRANGSYSTEM
SYSTÈME DE LIGNE DE TRANSMISSION DE VÉHICULE

(30) Priority: 02.07.2014 SE 1450830
(43) Date of publication of application: 10.05.2017
(73) Proprietor: BorgWarner Sweden AB, 261 24 Landskrona (SE)
(72) Inventor: NILSSON, Kristoffer, S-227 31 Lund (SE); NILSSON, Henrik, S-241 30 Eslöv (SE)
(74) Representative: Ström & Gulliksson AB
(86) International application number: PCT/EP2015/065167
(87) International publication number: WO 2016/001394

(56) References cited:
- WO-A2-2009/124018
- GB-A- 2 391 595
- GB-A- 2 490 427
- US-B1- 7 331 896

## Description

### Technical Field

The present invention relates to a vehicle driveline system. More particularly, the present invention relates to a vehicle driveline system having a transfer case.

### Background

There is an increasing demand to reduce CO2 emissions from passenger vehicles due to stricter legislation in most parts of the world. These increasing demands for loss reduction in combination with demand for increased functionality and lower cost creates a need for new driveline technology. Today more and more vehicles are equipped with driveline disconnect systems to reduce the losses of the AWD-System. The drawback of these systems are that they tend to come with a high cost and that the loss in the disconnected (2WD)-mode is not fully optimized, mainly because of the high clutch drag.

Also motivated by the CO*2 legislation more and more vehicles are and will be equipped with mild hybridization by for example a small 48 V electrical motor installed as a belt-integrated starter generator (B-ISG) on the engine. Although the B-ISG gives a very good reduction in CO2 it does not fully utilize the reduction potential of a small electrical motor in the vehicle. For example, while regenerating, the engine must be rotating since the B-ISG is directly connected to it, thus resulting in additional losses. Also the use of an electrical motor as B-ISG creates limited additional functionality to the vehicle.

The US patent published as US7331896 B1 discloses a drivetrain of an all-wheel drive motor vehicle provided for selective actuation and control of the torque distribution between first and second drive axle assemblies to match various vehicle operating conditions. The drivetrain comprises a power drive unit including a prime mover, the first drive axle assembly driven by the power drive unit to drive a first set of wheels, the second drive axle assembly driven by the power drive unit to drive a second set of wheels, a first clutch unit provided to disconnect the first drive axle assembly from the power drive unit, and a second clutch unit provided to disconnect the second drive axle assembly from the power drive unit.

In view of this there is a need for an improved vehicle driveline system.

### Summary

An object of the present invention is to provide a vehicle driveline system overcoming the drawbacks of prior art system.

According to a specific aspect a vehicle driveline system according to the independent claim is provided. Preferred embodiments are defined by the appended dependent claims.

### Brief Description of Drawings

The invention will be described in further detail under reference to the accompanying drawings in which:
Fig. 1 is a schematic view of a vehicle driveline system according to an embodiment;
Fig. 2 is a schematic view of the vehicle driveline system shown in Fig. 1, however operated in a mode in which the front axle is disconnected;
Fig. 3 is a schematic view of a differential according to an embodiment;
Fig. 4 is a cross sectional view of the differential shown in Fig. 3, however operated in a disconnect mode;
Fig. 5 is a cross sectional view of a differential according to an embodiment;
Fig. 6 is a cross sectional view of the differential shown in Fig. 3, however operated in a disconnect mode; and
Fig. 7 is a schematic view of a vehicle driveline system according to a further embodiment.

### Detailed Description

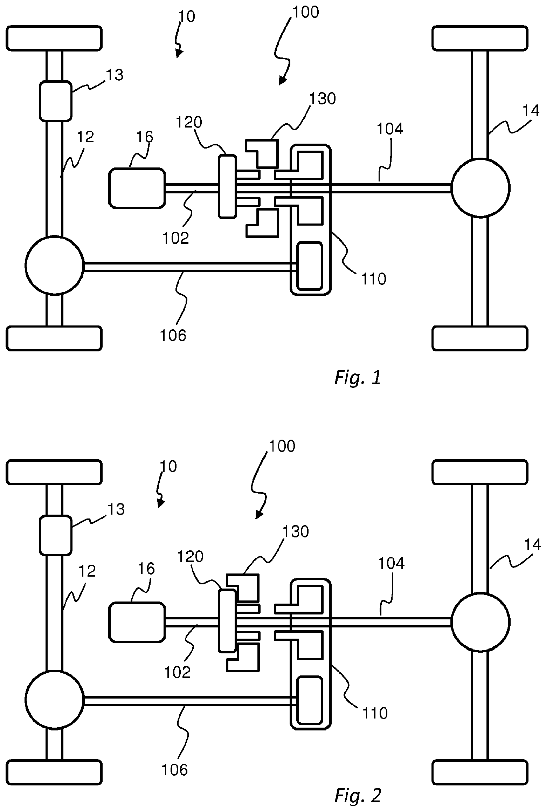

In Fig. 1 a vehicle driveline system 100 in the form of a transfer case is shown. The transfer case 100 is arranged in a vehicle 10 having a front axle 12, a rear axle 14, and an engine 16 for driving the transfer case 100 via a transmission (not shown).

The transfer case 100 has an input shaft 102 being connected to the engine 16, a rear output shaft 104, and a front output shaft 106. The front output shaft 106 is arranged non-coaxially relative the rear output shaft 104; the front output shaft 106 is connected to the input shaft 102 via a chain drive 110. Input torque is transmitted to a center differential 120, having a first output being the rear output shaft 104, and a second output being a driving side of the chain drive 110 thus connecting to the front output shaft 106. The front output shaft 106 is driving the front axle 12, while the rear output shaft 104 is driving the rear axle 14.

By using a center differential 120 with a torque distribution of for example 50/50 or 60/40 a good and robust AWD-system can be achieved. Normally the center differential topology cannot be combined with disconnect since disconnecting one shaft 104, 106 from the differential 120 will mean that there will be no torque transfer to any of the output shafts 104, 106. By combining an already existing disconnect 13 of for example the front axle 12 with a mechanical lock of the differential 120 the torque transfer to the other (in this case the rear) axle can be maintained. Since the described system 100 does not have a clutch, the drag losses will be very low in the disconnected mode. An actuator 130 is provided for controlling the operation of the differential 120. The actuator 130 may e.g. be a shifting sleeve or an electro-magnetic actuator.

The cost of the shifting sleeve 130 providing the connect/disconnect function will be lower than a clutch pack. Also the actuation of the shifting sleeve 130 between connected position and disconnected position can be done by a simpler actuation system and at lower cost than the clutch actuation system. The shifting sleeve 130 can also be designed to lock the differential 120 before disconnecting the front axle 12, thus creating a third state with AWD and locked differential 120 suitable for heavy off-road conditions.

In Fig. 1 the actuator 130, being realized as a shifting sleeve, is arranged in a connect mode connecting the front output of the differential 120 with the front axle 12. Hence, input torque from the engine 16 will be transferred to the front axle 12 as well as to the rear axle 14.

In Fig. 2 the shifting sleeve has moved in order to disconnect the front output of the differential 120 from the front axle 12. Hence, input torque will be transferred to the rear axle 14 only.

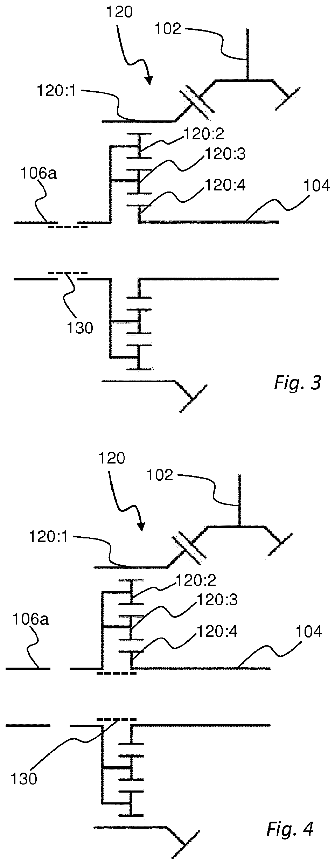

Figs. 3-4 show an embodiment of a differential 120 for use with the driveline system 100 of Figs. 1-2. The differential can for example be of bevel gear type as shown or of planetary type.

In Figs. 3 and 4, the differential is embodied as a planetary type differential having an input shaft 102 driving a ring gear 120:1. The ring gear 120:1 meshes with an outer planet carrier 120:2 in fixed rotational connection with an inner planet carrier 120:3. The inner planet carrier 120:3 meshes with a sun gear 120:4 being connected with a rear output 104, while the planet carriers 120:2, 120:3 are in driving connection with the front output 106a. An actuator 130, e.g. in the form of a shifting sleeve, is arranged to mechanically lock the rear output 104, i.e. the planet carriers 120:2, 120:3 to the front output 106a, i.e. the sun gear 120:4. In the normal operation, as is shown in Fig. 3, the actuator 130 is connecting the front output 106a with the planet carriers 120:2, 120:3. In this state, the differential 120 is open such that driving torque is provided to the front and rear axles.

In Fig. 4 a disconnected state is shown, in which the actuator 130 has been actuated to move for locking the differential 120. In this position the planet carriers 120:2, 120:3 are mechanically locked to the sun gear 120:4. At the same time the front output 106a is disconnected from the planet carriers 120:2, 120:3. If the front axle 106a is disconnected, driving torque will still be provided to the rear axle 104.

Upon a desired normal operation of the differential 120, an unlocked state is commanded as shown in Fig. 3. Here the actuator 130 is controlled to unlock the planet carriers 120:2, 120:3 from the ring gear 120:1 and at the same time connect the front connect the front output 106a to the planet carriers 120:2, 120:3. In this state, driving torque is provided to the front output as well as to the rear output.

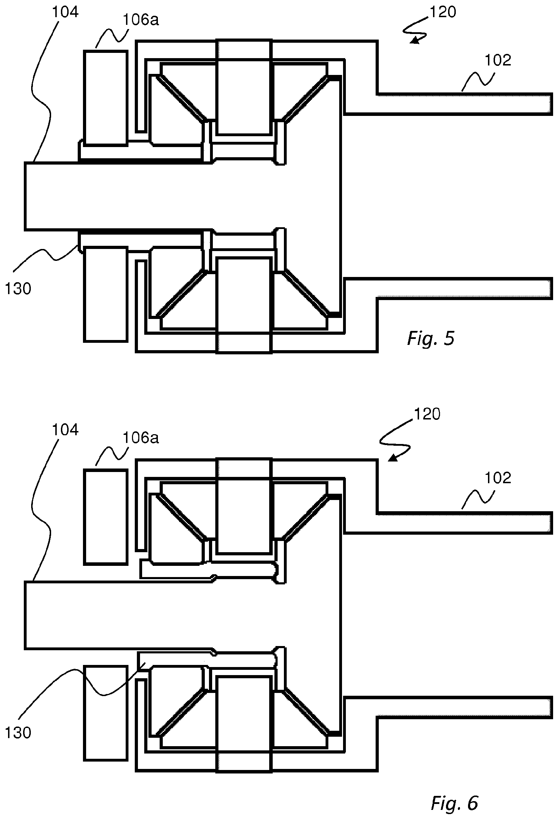

In Figs. 5 and 6 another embodiment of a differential is shown. The differential 120 has an input 102 for receiving input torque from the engine 16, and two outputs 104, 106a. The rear output 104 connects with the rear axle 14 as shown in Fig. 1, while the front output 106a forms a driving axle for the chain drive 110. Fig. 3 shows an operation mode in which the shifting sleeve 130 is connected to the front output 106a, i.e. the operation mode of Fig. 1. Fig. 4 shows an operation mode in which the shifting sleeve 130 is disconnected from the front output shaft 106a, i.e. the operation mode of Fig. 2.

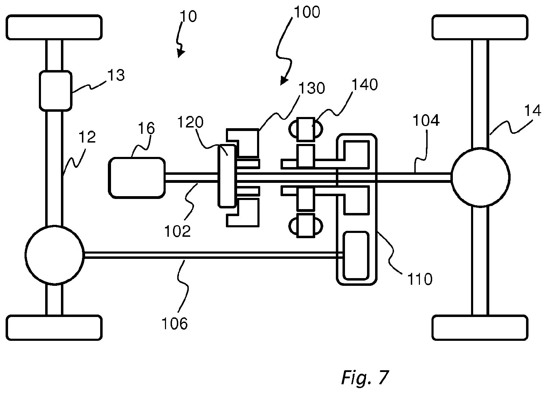

Now turning to Fig. 7 a further embodiment of a vehicle driveline system 100 in the form of a transfer case is shown. By installing an electrical motor 140 in the transfer case, preferably operating on 48V, and connect it to for example the chain sprocket of the chain drive 110, and thus the front axle output shaft 106, additional functionality can be created and losses can be reduced by using the motor 140 for hybrid functions. In fully disconnected mode the driveline and the electrical motor 140 will be stationary resulting in very low losses. In the need of regeneration the front axle dog clutch 13 can be connected and the electrical motor 140 can be used for regeneration. In the event of driving in disconnected 2WD-mode the electrical motor 140 can be used to accelerate the stationary front driveline 106, 12 and achieve fast AWD by applying torque to the front axle 12 with the electrical motor 140. By connecting the front axle dog clutch 13 the system can also be used for electrical driving at low speeds by applying torque with the electrical motor 140.

Although the present invention has been described above with reference to specific embodiments, it is not intended to be limited to the specific form set forth herein. Rather, the invention is limited only by the accompanying claims.

## Claims

1. A vehicle driveline system (100), comprising a differential (120) having an input (102), a front output (106a) connecting to a front axle (12) and a rear output (104) connecting to a rear axle (14), wherein said vehicle driveline system (100) further comprises one actuator (130) without any clutch, which is configured to control the operation of the differential (120) between a first mode, in which the front output (106a) is disconnected from the input (102), and a second mode, in which the front output (106a) is connected to the input (102), wherein the differential (120) is a bevel-gear differential or a planetary gear differential.

2. The vehicle driveline system according to claim 1, wherein the actuator (130) is further configured to control the operation of the differential in a third mode, in which the differential is locked and in which the front output (106a) is connected to the input (102).

3. The vehicle driveline system according to any one of the preceding claims, wherein said actuator (130) is a shifting sleeve.

4. The vehicle driveline system according to claim 3, wherein the shifting sleeve is arranged coaxially around the rear output (104).

5. The vehicle driveline system according to any one of the preceding claims, further comprising an electrical motor (140) which is in driving connection with the front output (106a).

6. The vehicle driveline system according to any one of the preceding claims, wherein the driveline system (100) forms a transfer case and wherein the front output (106a) is a shaft for driving the front axle (12) via a chain drive (110), and the rear output (104) is a shaft for driving the rear axle (14).

7. The vehicle driveline system according to any one of the preceding claims, wherein, when the differential is a planetary gear differential, a ring gear (120:1), a planet carrier (120:2, 120:3), and a sun gear (120:4) form the differential input (102), the front output (106a) and the rear output (104) in any order.

## Patentansprüche

1. Ein Fahrzeugantriebsstrangsystem (100), das ein Differential (120) mit einem Eingang (102), einem vorderen Ausgang (106a), der mit einer Vorderachse (12) verbunden ist, und einen hinteren Ausgang (104), der mit einer Hinterachse (14) verbunden ist, aufweist, wobei das Fahrzeugantriebsstrangsystem (100) ferner ein Stellglied (130) ohne Kupplung aufweist, das eingerichtet ist zum Steuern des Betriebs des Differentials (120) zwischen einem ersten Modus, in dem der vordere Ausgang (106a) von dem Eingang (102) getrennt ist, und einem zweiten Modus, in dem der vordere Ausgang (106a) mit dem Eingang (102) verbunden ist, wobei das Differential (120) ein Kegelraddifferential oder ein Planetenraddifferential ist.

2. Das Fahrzeugantriebsstrangsystem nach Anspruch 1, wobei das Stellglied (130) weiterhin eingerichtet ist zum Steuern des Betriebs des Differentials in einem dritten Modus, in dem das Differential gesperrt ist und in dem der vordere Ausgang (106a) mit dem Eingang (102) verbunden ist.

3. Das Fahrzeugantriebsstrangsystem nach einem der vorhergehenden Ansprüche, wobei das Stellglied (130) eine Schaltmuffe ist.

4. Das Fahrzeugantriebsstrangsystem nach Anspruch 3, wobei die Schaltmuffe koaxial um den hinteren Ausgang (104) angeordnet ist.

5. Das Fahrzeugantriebsstrangsystem nach einem der vorhergehenden Ansprüche, das weiterhin einen Elektromotor (140) aufweist, der in Antriebsverbindung mit dem vorderen Ausgang (106a) steht.

6. Das Fahrzeugantriebsstrangsystem nach einem der vorhergehenden Ansprüche, wobei das Antriebsstrangsystem (100) ein Verteilergetriebe bildet und wobei der vordere Ausgang (106a) eine Welle zum Antrieb der Vorderachse (12) mittels eines Kettenantriebs (110) ist, und wobei der hintere Ausgang (104) eine Welle zum Antrieb der Hinterachse (14) ist.

7. Das Fahrzeugantriebsstrangsystem nach einem der vorhergehenden Ansprüche, wobei, wenn das Differential ein Planetengetriebedifferential ist, ein Hohlrad (120:1), ein Planetenträger (120:2, 120:3) und ein Sonnenrad (120:4) den Differentialeingang (102), den vorderen Ausgang (106a) und den hinteren Ausgang (104) in beliebiger Reihenfolge bilden.

## Revendications

1. Système de ligne d'arbres de transmission (100) de véhicule, comprenant un différentiel (120) comportant une entrée (102), une sortie avant (106a) accouplée à un essieu avant (12) et une sortie arrière (104) accouplée à un essieu arrière (14), dans lequel ledit système de ligne d'arbres de transmission (100) de véhicule comprend en outre un actionneur (130) sans aucun embrayage, qui est conçu pour commander le fonctionnement du différentiel (120) entre un premier mode, dans lequel la sortie avant (106a) est désaccouplée de l'entrée (102) et un deuxième mode, dans lequel la sortie avant (106a) est accouplée à l'entrée (102), dans lequel le différentiel (120) est un différentiel à engrenage conique ou un différentiel à train planétaire.

2. Système de ligne d'arbres de transmission de véhicule selon la revendication 1, dans lequel l'actionneur (130) est en outre conçu pour commander le fonctionnement du différentiel dans un troisième mode, dans lequel le différentiel est verrouillé et dans lequel la sortie avant (106a) est accouplée à l'entrée (102).

3. Système de ligne d'arbres de transmission de véhicule selon l'une quelconque des revendications précédentes, dans lequel ledit actionneur (130) est un manchon baladeur.

4. Système de ligne d'arbres de transmission de véhicule selon la revendication 3, dans lequel le manchon baladeur est disposé coaxialement autour de la sortie arrière (104).

5. Système de ligne d'arbres de transmission de véhicule selon l'une quelconque des revendications précédentes, comprenant en outre un moteur électrique (140) qui est en prise d'entraînement avec la sortie avant (106a) .

6. Système de ligne d'arbres de transmission selon l'une quelconque des revendications précédentes, dans lequel le système de ligne d'arbres de transmission (100) forme une boîte de transfert et dans lequel la sortie avant (106a) est un arbre destiné à entraîner l'essieu avant (12) par le biais d'une transmission par chaîne (110), et la sortie arrière (104) est un arbre destiné à entraîner l'essieu arrière (14).

7. Système de ligne d'arbres de transmission de véhicule selon l'une quelconque des revendications précédentes, dans lequel, lorsque le différentiel est un différentiel à train planétaire, une couronne (120:1), un porte-satellites (120:2, 120:3) et une roue solaire (120:4) forment l'entrée (102) de différentiel, la sortie avant (106a) et la sortie arrière (104) dans n'importe quel ordre.
